# FASCICULE DE BREVET EUROPEEN

(11) **EP 4 573 910 B1**
(45) Date de publication et mention de la délivrance du brevet: **29.04.2026**
(21) Numéro de dépôt: 24221082.1
(22) Date de dépôt: 18.12.2024
(51) Int. Cl.: A21C 11/00, A21C 9/08

(54) **PROCÉDÉ DE RÉALISATION DE FONDS DE TARTE À BORD PLIÉ DANS UNE MACHINE DE TRAITEMENT DE PÂTONS POUR LA RÉALISATION DE FONDS DE TARTE À BORD PLIÉ ET UNE TELLE MACHINE DE TRAITEMENT**
VERFAHREN ZUR HERSTELLUNG VON TORTENBÖDEN MIT GEFALTETEM RAND IN EINER TEIGBEARBEITUNGSMASCHINE ZUR HERSTELLUNG VON TORTENBÖDEN MIT GEFALTETEM RAND UND EINE SOLCHE BEARBEITUNGSMASCHINE
METHOD FOR PRODUCING FOLDED EDGE PIE BASES IN A DOUGH PROCESSING MACHINE FOR PRODUCING FOLDED EDGE PIE BASES AND SUCH A PROCESSING MACHINE

(30) Priorité: 21.12.2023 FR 2314845
(43) Date de publication de la demande: 25.06.2025
(73) Titulaire: MAITRE PIERRE, 13016 Marseille (FR)
(72) Inventeur: WINGER, Christian, 57870 WALSCHEID (FR); MULLER, Olivier, 57870 PLAINE-DE-WALSCH (FR); WINGER, Loïc, 57870 HARTZVILLER (FR); CHOULOT, Jacques, 39230 SAINT LOTHAIN (FR); JEUNET, Lionel, 39150 ENTRE-DEUX-MONTS (FR)
(74) Mandataire: Ipsilon

(56) Documents cités:
- CA-C- 2 700 813
- KR-A- 20210 147 427
- US-A- 3 949 660
- US-A1- 2019 037 859

## Description

La présente invention concerne le domaine alimentaire et plus particulièrement le domaine des machines pour le traitement de la pâte avant cuisson. Elle a pour objet un procédé de réalisation de fonds de tarte à bord plié dans une machine de traitement de pâtons pour la réalisation de fonds de tarte à bord plié. Elle a également pour objet une telle machine de traitement.

On connait déjà des fonds de tarte à bord plié réalisés industriellement par la présente demanderesse. De tels fonds de tarte sont ensuite garnis pour former des tartes à bord plié puis généralement surgelés pour être vendus.

Le bord plié, outre son effet esthétique original, permet d'égaliser un bord de fond de tarte qui n'est pas parfaitement circulaire (ou rond) et de créer une résistance mécanique dans le fond de tarte évitant une opération de précuisson.

Ces fonds de tarte à bord plié sont actuellement réalisés manuellement par des opératrices dans des lignes de fabrication. Ils sont réalisés à partir de pâtons, c'est-à-dire des morceaux de pâte mis en forme, notamment en forme de boule, que l'opératrice vient manuellement placer dans une presse. La presse est commandée par l'opératrice qui va ensuite transférer le fond de tarte, obtenu par pressage à chaud dans la presse, sur un plateau rotatif horizontal. L'opératrice va alors plier le bord du fond de tarte à la main sur toute sa circonférence en effectuant une succession de plis se chevauchant en conférant au bord ainsi plié un aspect de tressage.

Ces opérations manuelles nécessitent un apprentissage de longue durée pour obtenir une productivité satisfaisante et sont contraignantes pour les opératrices car elles exigent des efforts musculaires qui peuvent s'accompagner de douleurs articulaires impactant sur leur santé et exposant ces dernières à des facteurs de pénibilité pouvant laisser des traces durables.

US 3 949 660 A et US 2019/037859 A1 divulguent des procédés de réalisation de fonds de tarte dans des machines de traitement de pâtons pour la réalisation de fonds de tarte, lesdites machines comprenant au moins une presse pour former un fond de tarte avec un bord circulaire par pressage du pâton.

La présente invention a pour but de pallier ces inconvénients, tout en permettant une amélioration de la productivité, en proposant un procédé de réalisation de fonds de tarte à bord plié dans une machine de traitement de pâtons pour la réalisation de fonds de tarte à bord plié et une telle machine de traitement.

Le procédé, selon la présente invention, de réalisation de fonds de tarte à bord plié dans une machine de traitement de pâtons pour la réalisation de fonds de tarte à bord plié, la machine de traitement comprenant un dispositif de commande et au moins un module de traitement, le module de traitement comprenant au moins une presse, au moins un poste de pliage comportant un plateau rotatif horizontal et au moins un plieur mobile dans une zone de pliage fixe par rapport au plateau rotatif et des premiers, deuxièmes et troisièmes moyens de transfert, se caractérise en ce qu'il consiste à réaliser les étapes suivantes commandées par le dispositif de commande à la suite du transfert, à l'aide des premiers moyens de transfert, de chaque pâton dans la presse :
- commander la presse pour former un fond de tarte avec un bord circulaire par pressage du pâton dans la presse,
- commander le transfert du fond de tarte depuis la presse sur le plateau rotatif à l'aide des deuxièmes moyens de transfert, puis commander de manière coordonnée le plieur et la rotation du plateau rotatif pour obtenir, par pliages successifs de la section du bord du fond de tarte se trouvant dans la zone de pliage et dépassant du plateau rotatif, sur toute ou partie de la circonférence du bord du fond de tarte, une succession de plis se chevauchant,
- commander l'évacuation, à l'aide des troisièmes moyens de transfert, du fond de tarte à bord plié ainsi obtenu.

La machine de traitement, selon la présente invention, de pâtons pour la réalisation de fonds de tarte à bord plié, se caractérise en ce qu'elle comprend un dispositif de commande et au moins un module de traitement, le module de traitement comprenant :
- au moins une presse permettant de réaliser, par pressage, de préférence à chaud, de chaque pâton transféré dans la presse, des fonds de tarte à bord circulaire,
- au moins un poste de pliage comportant un plateau rotatif horizontal de forme circulaire et au moins un plieur mobile dans une zone de pliage fixe par rapport au plateau rotatif, le dispositif de commande étant apte et destiné, après le transfert d'un fond de tarte sur le plateau rotatif, à commander de manière coordonnée le plieur et le plateau rotatif pour obtenir, par pliages successifs de la section du bord du fond de tarte se trouvant dans la zone de pliage en dépassant du plateau rotatif, sur toute ou partie de la circonférence du bord du fond de tarte, une succession de plis se chevauchant,
- des premiers moyens de transfert permettant d'alimenter la presse en pâton, des deuxièmes moyens de transfert permettant d'alimenter le poste de pliage en fond de tarte en étant aptes et destinés à transférer chaque fond de tarte formé par la presse jusque sur le plateau rotatif et avec centrage sur ce dernier, des troisièmes moyens de transfert permettant d'évacuer chaque fond de tarte à bord plié ainsi obtenu, le dispositif de commande étant apte et destiné à commander les premiers, deuxième et troisième moyens de transfert.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue schématique en perspective d'un module de traitement d'une machine de traitement selon la présente invention, dans un mode de réalisation préférentiel du module de traitement avec deux postes de pliage situés de part et d'autre de la presse,
[Fig. 2] est une vue schématique en perspective de l'un des deux postes de pliage représentés sur la figure 1,
[Fig. 3] montre le poste de pliage de la figure 2 avec un fond de tarte transféré dans le poste de pliage et reposant sur le plateau rotatif avec le doigt de retenue en position de retenue,
[Fig. 4] montre le poste de pliage de la figure 3 avec le marqueur en position de marquage,
[Fig. 5] est une vue partielle du poste de pliage de la figure 4 dans une autre orientation et sans le fond de tarte,
[Fig. 6] est une vue en perspective du poste de pliage de la figure 1 avec le plieur en position finale de pliage,
[Fig. 7] est une vue en perspective du préhenseur à ventouse des troisièmes moyens de transfert,
[Fig. 8] est une représentation schématique du fond de tarte en vue de dessus selon les trois situations suivantes :
[Fig. 8a] le bord du fond de tarte ne comporte pas de plis,
[Fig. 8b] le bord du fond de tarte est plié sur une partie de sa circonférence,
[Fig. 8c] le bord du fond de tarte est plié sur toute sa circonférence,
[Fig. 9] est une vue schématique en perspective d'une machine de traitement selon la présente invention comportant une pluralité de module de traitement.

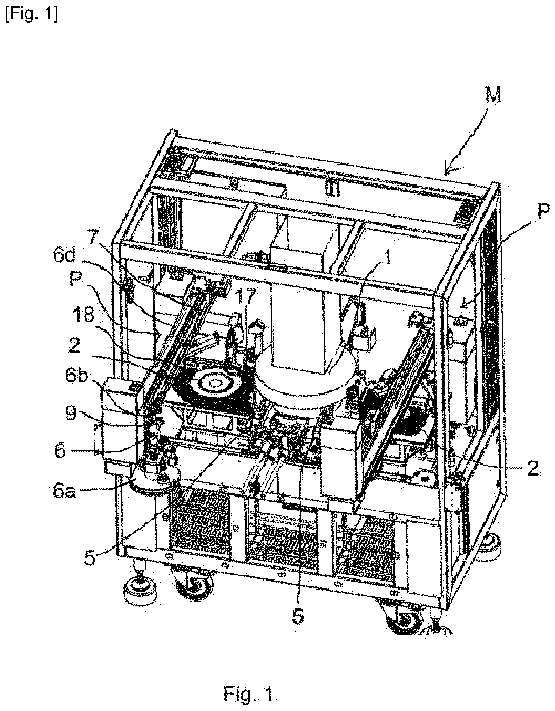

Les figures 1 à 7 et 9 montrent une machine de traitement, selon la présente invention, de pâtons pour la réalisation de fonds de tarte F à bord plié.

Une telle machine peut être installée dans une ligne de traitement, non représentée, comportant au moins un poste réalisation des pâtons et au moins un poste de garnissage des fonds de tarte à bord plié. Dans une telle ligne de traitement, la machine de traitement est alors positionnée entre le poste de réalisation des pâtons et le poste de garnissage.

Conformément à la présente invention, la machine de traitement comprend un dispositif de commande et au moins un module de traitement, le (ou chaque) module de traitement comprenant :
- au moins une presse 1 permettant de réaliser, par pressage, de préférence à chaud, de chaque pâton transféré dans la presse 1, des fonds de tarte F à bord circulaire,
- au moins un poste de pliage P comportant un plateau rotatif 2 horizontal de forme circulaire et au moins un plieur 3 mobile dans une zone de pliage fixe par rapport au plateau rotatif 1, c'est-à-dire relativement par rapport au mouvement de rotation du plateau rotatif 2. On comprend que le plateau rotatif 2 est en mouvement (de rotation) par rapport à la zone de pliage qui est définie par la zone de déplacement du plieur 3, notamment entre une position d'attente et une position finale de pliage qui seront détaillées par la suite.

Toujours conformément à la présente invention, le dispositif de commande est apte et destiné, après le transfert d'un fond de tarte F sur le plateau rotatif 2, à commander de manière coordonnée le plieur 3 et la rotation du plateau rotatif 1 pour obtenir, par pliages successifs de la section du bord du fond de tarte F se trouvant dans la zone de pliage en dépassant du plateau rotatif 2, sur toute ou partie de la circonférence du bord du fond de tarte, une succession de plis F1 se chevauchant. On entend par chevauchement une section du bord du fond de tarte venant se superposer en partie à un pli précédent. Une telle succession de plis réalisés dans le bord du fond de tarte F en se chevauchant confère audit bord ainsi plié un aspect de tressage ou de torsade. On comprend que le plateau rotatif 2 présente un diamètre inférieur à celui des fonds de tarte F.

On comprend également que le bord du fond de tarte F est le bord périphérique (ou le contour ou le pourtour) du fond de tarte F. On entend par section du bord du fond de tarte F une section correspondant à une section du bord de fond de tarte F sensiblement entre deux rayons du fond de tarte F circulaire, et dont l'angle entre les deux rayons est inférieur à 45 degrés, de préférence un angle compris entre 15 et 25 degrés.

Chaque pli F1 peut ainsi être réalisé à l'aide du plieur 3 en rabattant sensiblement vers le centre du fond de tarte F la section du bord du fond de tarte F se trouvant dans la zone de pliage en dépassant du plateau rotatif 1, c'est-à-dire de son bord périphérique.

Toujours conformément à la présente invention, pour pouvoir alimenter la presse 1 en pâton et le poste de pliage P en fond de tarte F, le module de traitement comprend en outre :
- des premiers moyens de transfert 4 permettant d'alimenter la presse 1 en pâton,
- des deuxièmes moyens de transfert 5 permettant d'alimenter le poste de pliage en fond de tarte F en étant aptes et destinés à transférer chaque fond de tarte F formé par la presse 1 jusque sur le plateau rotatif 1 et avec centrage sur ce dernier,
- des troisièmes moyens de transfert 6 permettant d'évacuer chaque fond de tarte F à bord plié ainsi obtenu (dans le poste de pliage).

Le dispositif de commande est en outre apte et destiné à commander les premiers, deuxièmes et troisièmes moyens de transfert 4, 5, 6.

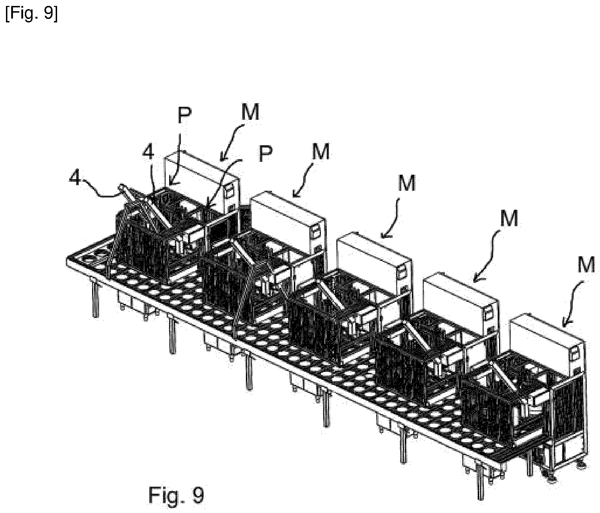

On comprend, comme on peut le voir sur la figure 9, que la machine de traitement selon la présente invention peut comprendre un ou plusieurs modules de traitement M, par exemple cinq modules de traitement M comme on peut le voir sur la figure 9. Dans le cas d'une pluralité de modules de traitement M, les modules de traitement M peuvent être de préférence alignés (figure 9).

Le dispositif de commande peut comprendre au moins une unité de commande (ou dit autrement, par exemple : une unité de pilotage, un automate, une unité de gestion ou unité de contrôle) par module de traitement M. Dans le cas d'un seul module de traitement le dispositif de commande peut alors comprendre une seule unité de commande. Dans le cas d'une pluralité de module de traitement, chaque module de traitement peut comprendre sa propre unité de commande. Une telle unité de commande peut comprendre un programme exécuté par un processeur (ou microcontrôleur ou ordinateur) de l'unité de commande pour mettre en œuvre dans le module de traitement M les étapes de fonctionnement, notamment le rythme et la cadence des opérations, et notamment la commande de manière coordonnée du plieur 3 et de la rotation du plateau rotatif 1 et la commande des premiers, deuxièmes et troisièmes moyens de transfert. Dans le cas où la machine de traitement comprend plusieurs modules de traitement (figure 9), le dispositif de commande peut comprendre une unité centrale de pilotage reliée aux unités de commande propres à chaque module de traitement M.

Dans un mode de réalisation préférentiel d'un tel module de traitement M, le plateau rotatif 2 est apte et destiné à être mis en rotation pas à pas de sorte à pouvoir modifier, à chaque pas commandé par un signal de commande, la position angulaire du plateau rotatif 2. En outre, l'unité de commande peut alors être apte et destinée à commander de manière coordonnée le plieur 3a et la rotation pas à pas du plateau rotatif 2 selon un nombre de pas prédéterminé de sorte à réaliser chaque pli F1 dans une position angulaire prédéterminée du plateau rotatif 2 et à modifier lors du pas suivant la position angulaire du fond de tarte F reposant sur le plateau rotatif 1 pour réaliser le pli F1 suivant.

Le plateau rotatif 2 peut être ainsi être mis en rotation pas à pas de sorte à être déplacé à chaque pas d'un degré de rotation prédéterminé. On comprend que la rotation du plateau rotatif 2 permet d'entrainer en rotation le fond de tarte F qui repose sur le plateau rotatif 2 en étant solidaire de ce dernier en rotation. Par exemple, pour réaliser 18 plis F1, le plateau rotatif 2 peut tourner de 20° (ou environ 20°) à chaque pas.

On comprend qu'à chaque pas, une section différente du bord du fond de tarte F se trouve dans la zone de pliage.

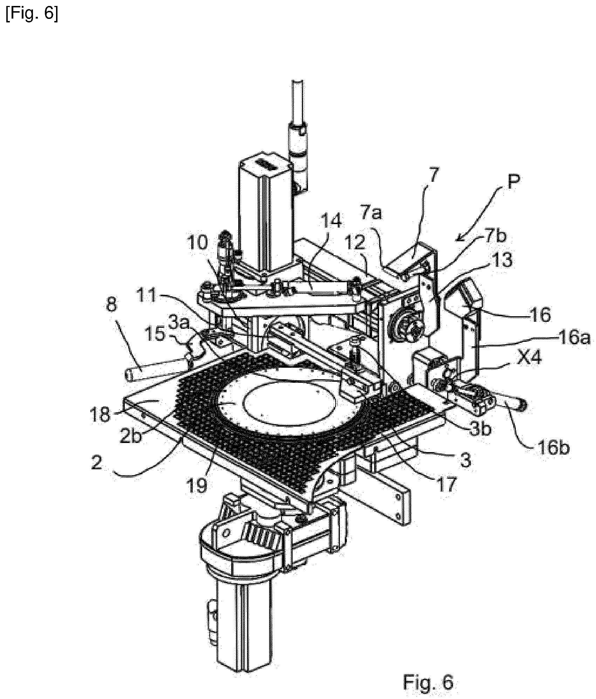

De préférence, le plieur 3 est monté pivotant autour d'un axe horizontal. De préférence, le plieur 3 peut comporter une plaque, de préférence de forme globalement rectangulaire. De préférence, comme on peut le voir sur la figure 6, le plieur 3 peut comporter un coin biseauté 3a permettant de plier une section du bord de fond de tarte F en donnant plus de volume au pli de sorte à ne pas obtenir un pli plat ou aplati (voir notamment la figure 6).

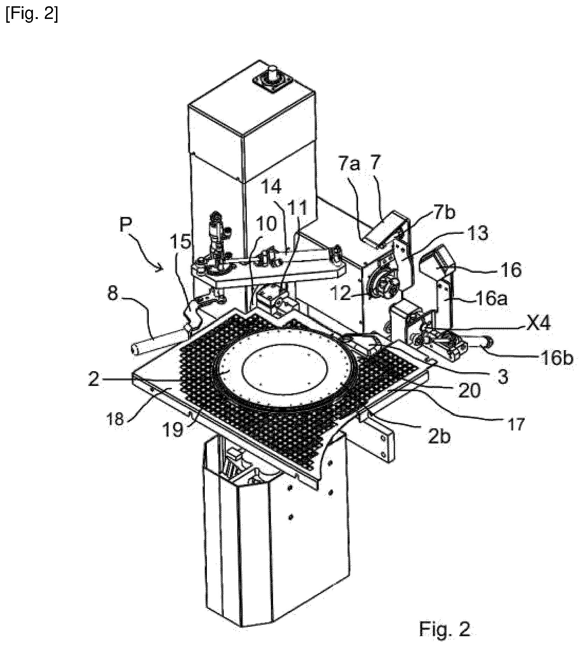

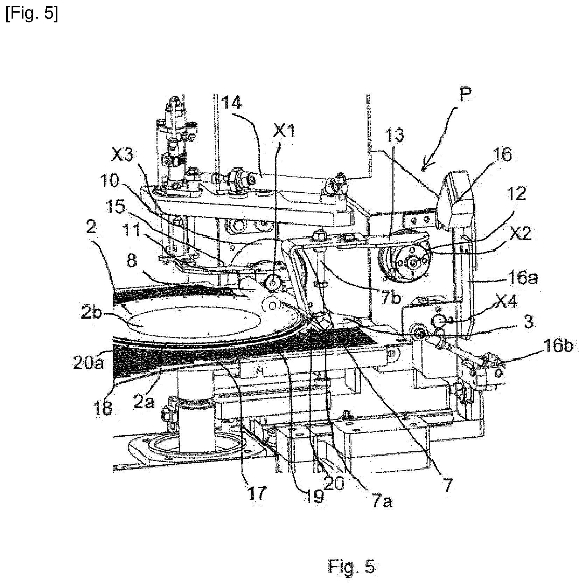

De préférence, le plieur 3 mobile est apte et destiné à être déplacé, de préférence par pivotement autour d'un axe horizontal, entre une position d'attente située à côté du plateau rotatif 2 en étant sensiblement aligné avec le bord du plateau rotatif 2 (figures 2 et 5) jusqu'à une position finale de pliage située au-dessus du plateau rotatif 2 (figure 6). Le déplacement entre la position d'attente et la position finale de pliage permet d'assurer le pliage de la section correspondante du bord du fond de tarte F pour former un pli F1. Une telle position d'attente permet au plieur 3 de pouvoir s'étendre sous la section du bord du fond de tarte F se trouvant dans la zone de pliage en dépassant du plateau rotatif 2 afin de pouvoir prendre ladite section et la plier lors de son déplacement vers la position finale de pliage, notamment en la rabattant vers le centre du plateau rotatif 2.

De préférence le plieur 3 peut être mobile dans un plan vertical, dit plan de pliage, désaxé par rapport au centre du plateau rotatif 2. On entend par « désaxé » le fait que le plan de pliage ne passe pas par le centre du plateau rotatif 2. Ce désaxage permet au plieur 3 de plier une plus grande quantité de pâte et d'obtenir un pli F1 plus large.

Pour actionner le plieur 3 sous la commande du dispositif de commande, le module de traitement M peut comprendre un actionneur 10, qui peut consister par exemple en un vérin ou un moteur électrique, commandé par le dispositif de commande. Le plieur 3 peut être monté sur un support 11 entrainé en rotation autour d'un axe X1 horizontal de sorte à pouvoir déplacer le plieur 3 par pivotement entre sa position d'attente et sa position finale de pliage. L'axe X1 forme ainsi un axe de pivotement du plieur 3.

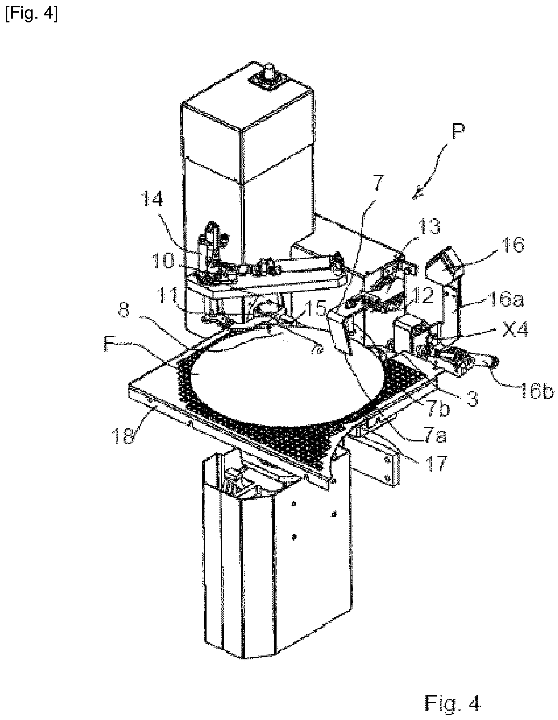

Dans un mode de réalisation préférentiel, comme on peut le voir notamment sur les figures 2 à 7, le poste de pliage P peut comprendre en outre un marqueur 7 mobile, de préférence métallique, associé au plieur 3. On entend par «associé» le fait que le marqueur 7 et le plieur 3 forme un ensemble de marquage/pliage permettant la réalisation d'un pli f1 de façon optimisée. Le marqueur 7 peut comporter un bord d'appui 7a horizontal, de préférence rectiligne, et peut être mobile entre une position d'attente (figures 1 à 3, 6) et une position de marquage dans la zone de pliage (figures 4 et 5). Le bord d'appui 7a est de préférence arrondi. Dans la position de marquage, le marqueur 7 peut être apte et destiné à exercer, par son bord d'appui 7a, une pression dans le fond de tarte F en retrait de la section du bord du fond de tarte F se trouvant dans la zone de pliage de sorte à créer une marque dans la pâte (matière du fond de tarte F) formant dans cette dernière un point d'inflexion. Le point d'inflexion doit être compris comme formant une zone de faiblesse dans la pâte, la zone pouvant se présenter sous la forme d'une ligne. Le dispositif de commande peut alors être et destiné, pour la réalisation de chaque pli F1 :
- à commander le marqueur 7 pour le déplacer depuis la position d'attente jusqu'à la position de marquage, puis à commander le retour du marqueur 7 vers sa position d'attente,
- puis à commander le plieur 3 pour plier la section correspondante du bord du fond de tarte F autour du point d'inflexion.

De préférence, le plateau rotatif 2 peut comprendre sur sa face supérieure un rebord 2a annulaire en retrait de son bord périphérique (ou de son contour) de sorte à créer une rainure annulaire 20a (ou un épaulement) tournée vers l'extérieur du plateau rotatif 2 et le bord d'appui 7a du marqueur 7 est apte et destiné à venir en position de marquage dans la rainure annulaire 20a. La position du bord d'appui 7a dans la rainure annulaire permet d'exercer la pression dans la pâte pour former le point d'inflexion précité (figures 4, 5).

Pour actionner le marqueur 7 sous la commande du dispositif de commande, le module de traitement M peut comprendre un actionneur 12 commandé par le dispositif de commande, qui peut consister par exemple en un vérin ou un moteur électrique. Le marqueur 7 peut être monté sur un support 13 entraîné en rotation par l'actionneur 12 autour d'un axe horizontal X2. L'axe X2 forme ainsi un axe de pivotement du marqueur 7.

De préférence, le marqueur 7 peut présenter une forme de L dont l'une des extrémités forme le bord d'appui 7a.

Grâce à un tel ensemble plieur, la présente invention peut prévoir dans une forme préférentielle permettant de finaliser le pliage du dernier pli F1, que le plieur 3 soit apte et destiné à se trouver, en position finale de pliage, sur la trajectoire du marqueur 7 et que le plieur 3 comporte un élément d'appui 3a. Le marqueur 7 peut alors être apte et destiné, lors de son déplacement vers la position de marquage et lorsque le plieur 3 est en position de pliage final, à venir en contact avec pression sur l'élément d'appui 3a du plieur 3a. De préférence, le marqueur 7 peut comprendre un élément de contact 7b apte et destiné à venir en contact avec l'élément d'appui 3a du plieur 3 (voir notamment les figures 2 à 6). Le contact avec pression (ou la pression) sur le plieur 3 permet de finaliser le dernier pli F1, notamment pour refermer le bord ainsi plié.

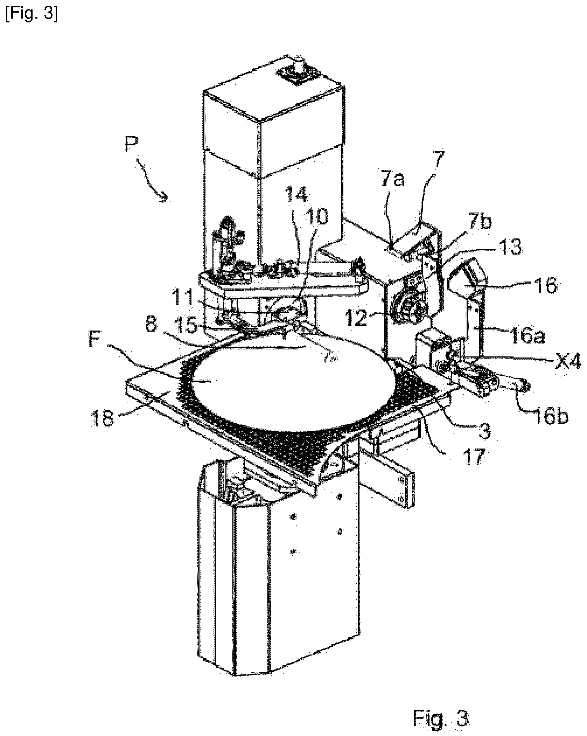

De préférence, le poste de pliage P, comme on peut le voir notamment sur les figures 2 à 6, peut comprendre un doigt de retenue 8 mobile entre une position d'attente (figures 2, 6) et une position de retenue au-dessus du plateau rotatif 2 (figures 3 à 5) de sorte à permettre, au début du pliage, durant la réalisation d'un nombre prédéterminé de plis F1, de maintenir le fond de tarte F sous le doigt de retenue 8. Ce maintien permet d'obtenir une résistance suffisante de pâte pour la suite du pliage.

Pour actionner le doigt de retenue 8 sous la commande du dispositif de commande, le module de traitement M peut comprendre un actionneur 14, qui par exemple un vérin ou un moteur électrique, commandé par le dispositif de commande. Le doigt de retenue 8 peut être monté sur un support 15 entraîné en rotation à l'aide de l'actionneur 14 autour d'un axe vertical X3. L'axe X3 forme ainsi un axe de pivotement du doigt de retenue 8.

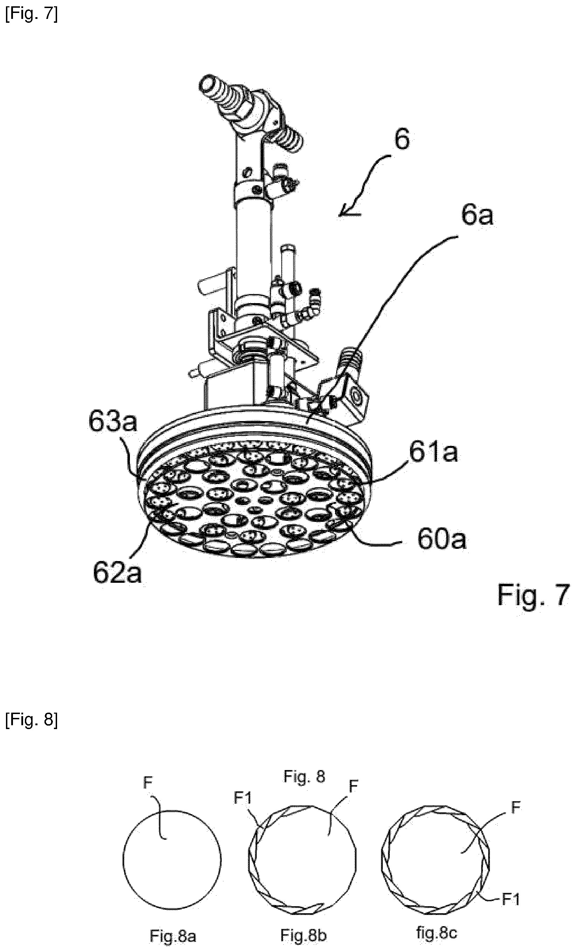

Le poste de pliage P peut comprendre en outre un patin de maintien 16 mobile entre une position d'attente et une position de maintien au-dessus du plateau rotatif 2. Le patin de maintien 16 permet en position de maintien de maintenir le fond de tarte F en empêchant qu'une section trop grande du bord de fond de tarte F ne soit relevée par le plieur 3 à partir d'une certaine longueur du bord plié, notamment à partir ,environ, des deux tiers de la circonférence du fond de tarte F (figure 8b), car à partir de cette longueur (circonférence) la pâte n'est plus assez lourde de sorte qu'une section trop grande (en comparaison avec les sections précédentes) serait pliée par le plieur 3. Le patin 16 peut être fixé sur un support 16a entrainé en rotation autour d'un axe X4 horizontal au moyen d'un actionneur 16b, par exemple du type vérin, commandé par le dispositif de commande. L'axe X4 forme ainsi un axe de pivotement du patin 16.

De préférence, les axes X1, X2 et/ou X4 de pivotement respectifs du plieur 3, du marqueur 7 et/ou du patin 16 sont parallèles entre eux.

Si on se réfère notamment aux figures 1 à 6, on peut voir que les deuxièmes moyens de transfert 5 peuvent être configurés pour pouvoir transférer chaque fond de tarte F depuis la presse 1 jusque sur le plateau rotatif 2 en le saisissant et le déplaçant par glissement sur une surface horizontale 17 de transfert continue ou quasi continue s'étendant au même niveau que le plateau rotatif 2 (notamment de sa face supérieure) et au moins entre la presse 1 (la surface supportant le fond de tarte F) et le plateau rotatif 2. Ces deuxièmes moyens de transfert 5 peuvent comprendre un chariot mobile en translation entre la presse 1 et le plateau rotatif 2 et pouvant être muni de ventouses d'aspiration ou autres moyens de préhension permettant de saisir le fond de tarte F pour le déplacer par glissement sur la surface horizontale 17 de transfert.

On peut voir également sur les figures 1 à 6 que le poste de pliage 7 peut comprendre une plaque horizontale 18 de maintien et/ou de glissement, de préférence métallique, par exemple une tôle, dans laquelle est pratiquée une ouverture traversante 19 recevant le plateau rotatif 2 et une découpe 20 débouchant dans l'ouverture traversante 19 créant un espace de passage permettant à la section du bord du fond de tarte F située dans la zone de pliage de reposer sur la plieur 3 en position d'attente et le passage du plieur 3 lors de son déplacement vers la position finale de pliage. La plaque horizontale 18 permet de créer une surface horizontale autour du plateau rotatif, à l'exception de l'ouverture créée par la découpe 20, pour maintenir le bord du fond de tarte F. De préférence, la plaque horizontale 18 peut se prolonger jusqu'à la presse 1 de sorte à former par sa face supérieure la surface horizontale 17 de transfert par glissement.

De préférence, comme on peut le voir sur les figures 2 et 5, le plieur 3 est configuré pour pouvoir s'étendre dans une position horizontale en position d'attente.

Si on se réfère aux figures 1, 2, 5 et 6, on peut voir que la présente invention peut prévoir que, de préférence, le plateau rotatif 2 peut comporter des trous d'aspiration 2b permettant de maintenir le fond de tarte F sur le plateau rotatif 2, notamment lors de sa rotation. L'aspiration ou le vide (ou la dépression) créé par chaque trou d'aspiration 2b peut être réalisé à l'aide d'une pompe à vide, par exemple une pompe à vide à piston ou une pompe centrifuge ou à l'aide d'un générateur de vide tels que des éjecteurs fonctionnant sur le principe de venturi et qui sont particulièrement adaptés dans l'automatisation d'une telle machine de traitement.

Si on se réfère maintenant à la figure 1 et à la figure 7, on peut voir que les troisièmes moyens de transfert 6 peuvent comprendre, de préférence, un préhenseur à ventouse 6a. Le préhenseur à ventouse 6a peut comporter une face d'aspiration 60a, de préférence de forme circulaire, de préférence plane, munie de trous 61a d'aspiration et/ou de soufflage permettant de saisir le fond de tarte F, de préférence en retrait du bord plié. Le diamètre de la face d'aspiration 6a est préférentiellement déterminé de sorte à saisir le fond de tarte par aspiration en retrait du bord plié pour de ne pas déformer ou détériorer ce dernier. La face d'aspiration 6a présente ainsi une forme et des dimensions permettant son positionnement dans la partie intérieur du fond de tarte F à bord plié. En fonctionnement, le préhenseur à ventouse est abaissé, par exemple grâce à un bras articulé 9, vers le fond de tarte F à bord plié reposant sur le plateau rotatif 2 pour saisir le fond de tarte F par un effet d'aspiration/de vide, puis est déplacé avec le fond de tarte F à l'extérieur du module M pour son évacuation. L'évacuation peut consister à transférer le fond de tarte F vers un convoyeur d'évacuation (non représenté) pour le relâcher sur ce dernier en interrompant le vide. Un effet de soufflage par les trous 60a d'aspiration/soufflage permet d'aider l'éjection du fond de tarte F qui peut rester coller à la ventouse. En outre, pour optimiser le relâchement/l'éjection, et préserver la forme et le bord plié du fond de tarte qui peuvent être affectés par l'éjection, le préhenseur à ventouse comporte en outre une grille d'éjection 62a mobile s'étendant devant la face d'aspiration/de soufflage 60a ou en fonctionnement lors de la saisie d'un fond de tarte F entre le fond de tarte F et la face d'aspiration/de soufflage 60a. De préférence, la grille d'éjection 62a peut être mobile en translation perpendiculairement à la face d'aspiration/soufflage 60a. De préférence, la grille d'éjection 62a peut être réalisée dans un matériau, tel que le téflon, empêchant la pâte (du fond de tarte F) d'adhérer à la grille d'éjection 62a. Le déplacement de la grille d'éjection 62a permet ainsi de pousser le fond de tarte F et d'empêcher tout collage de la pâte contre la face d'aspiration/soufflage 60a. Enfin, la présente invention peut prévoir avantageusement qu'un joint annulaire 63a souple entoure le bord de la face d'aspiration/soufflage 60a. En position de saisie du préhenseur à ventouse, le joint annulaire 63a s'étend contre la face interne du bord plié du fond de tarte F, ce qui permet de maintenir le bord plié lors de la saisie du fond de tarte F, car celui-ci peut retomber et/ou se déformer par gravité lors du déplacement du préhenseur à ventouse. L'aspiration ou le vide (ou la dépression) créé par chaque trou 61a d'aspiration peut être réalisé à l'aide d'une pompe à vide, par exemple une pompe à vide à piston ou une pompe centrifuge ou à l'aide d'un générateur de vide tels que des éjecteurs fonctionnant sur le principe de venturi et qui sont particulièrement adaptés dans l'automatisation d'une telle machine de traitement.

Les troisièmes moyens de transfert 6 peuvent comprendre en outre un chariot 6b mobile, de préférence en translation, au-dessus du plateau rotatif 2 et entre le poste de pliage P et un point d'évacuation et d'éjection du fond de tarte F saisi par exemple situé au-dessus d'un convoyeur d'évacuation situé à côté du module de traitement M, pour transporter le fond de tarte F à bord plié vers un poste de garnissage d'une ligne de traitement. Un rail de guidage 6c permet d'assurer le déplacement en translation du chariot 6b monté sur ce dernier.

De préférence, la machine de traitement peut comprendre au moins une interface homme machine, dite interface IHM, comportant un écran d'affichage permettant la commande et/ou la programmation des différents paramètres (nombre de plis, vitesse de pliage, pas du plateau...). Plus particulièrement, le ou au moins l'un des module(s) de traitement M peut disposer de sa propre interface IHM permettant la commande et/ou la programmation des différents paramètres (nombre de plis, vitesse de pliage, pas du plateau...) propres au fonctionnement du module de traitement M.

La présente invention a également pour objet un procédé de réalisation de fonds de tarte F à bord plié dans une machine de traitement de pâtons pour la réalisation de fonds de tarte F à bord plié. La machine de traitement peut être une machine de traitement selon la présente invention qui permet alors la mise en œuvre du procédé.

Conformément à la présente invention, le procédé consiste à réaliser les étapes suivantes commandées par l'unité de commande à la suite du transfert, à l'aide des premiers moyens de transfert 4, de chaque pâton dans la presse 1 :
- commander la presse 1 pour former un fond de tarte F avec un bord circulaire par pressage du pâton dans la presse 1,
- commander le transfert du fond de tarte F depuis la presse 1 sur le plateau rotatif 1 à l'aide des deuxièmes moyens de transfert 5, puis commander de manière coordonnée le plieur 3 et la rotation du plateau rotatif 1 pour obtenir, par pliages successifs (à l'aide du plieur 3) de la section du bord du fond de tarte F se trouvant dans la zone de pliage et dépassant du plateau rotatif 2, sur toute ou partie de la circonférence du bord du fond de tarte, une succession de plis F1 se chevauchant,
- commander l'évacuation, à l'aide des troisièmes moyens de transfert 6, du fond de tarte F à bord tressé ainsi obtenu.

Une telle succession de plis réalisés dans le bord du fond de tarte F en se chevauchant confère audit bord un aspect de tressage ou de torsade.

Lorsque le plateau rotatif 2 est apte et destiné à être mis en rotation pas à pas et à l'arrêt à chaque pas de sorte à pouvoir modifier, à chaque pas commandé par un signal de commande, l'orientation angulaire du plateau rotatif 2, le procédé peut consister à commander de manière coordonnée le plieur 3a et la rotation pas à pas du plateau rotatif 2 selon un nombre de pas prédéterminé de sorte à réaliser chaque pli F1 dans une position angulaire prédéterminée du plateau rotatif 2 et à modifier lors du pas suivant la position angulaire du fond de tarte F reposant sur le plateau rotatif 1 pour réaliser le pli F1 suivant.

De préférence, chaque pli F1 est réalisé à l'aide du plieur 3 en rabattant sensiblement vers le centre du fond de tarte F la section du bord du fond de tarte F se trouvant dans la zone de pliage en dépassant du plateau rotatif 1.

De préférence, le procédé consiste à commander le plieur 3 pour le déplacer, de préférence par pivotement autour d'un axe horizontal, entre une position d'attente située à côté du plateau rotatif 2 de sorte que le plieur 3 s'étende sous la section du bord du fond de tarte F se trouvant dans la zone de pliage en dépassant du plateau rotatif 2 jusqu'à une position finale de pliage située au-dessus du plateau rotatif 2. Le déplacement entre la position d'attente et la position finale de pliage permet d'assurer le pliage de la section correspondante du bord du fond de tarte F pour former un pli F1.

De préférence, le plieur 3 est mobile en pivotement autour d'un axe horizontal.

Lorsque le poste de pliage P comprend un marqueur 7 mobile associé au plieur 3, le procédé peut consister à réaliser la séquence suivante pour la réalisation de chaque pli :
- à commander le marqueur 7 pour le déplacer dans la zone de pliage dans une position de marquage au-dessus du plateau rotatif 2 de sorte à exercer dans la position de marquage, par son bord d'appui 7a, une pression dans le fond de tarte F (légèrement) en retrait de la section du bord du fond de tarte F située dans la zone de pliage pour créer une marque dans la pâte formant un point d'inflexion, puis à commander le retour du marqueur 7 vers sa position d'attente,
- puis à commander le plieur 3 pour plier ladite section du bord du fond de tarte F autour du point d'inflexion.

Lors de la réalisation du dernier pli F1, le procédé peut consister à commander une nouvelle fois le marqueur 7 pour le déplacer vers le plieur 3 en position de pliage de sorte que le marqueur 7 vienne en contact avec pression sur le plieur 3 pour finaliser le dernier pli F1, notamment pour fermer le bord ainsi plié.

De préférence, le procédé consiste à presser à chaud le pâton pour former le fond de tarte.

De préférence, le procédé peut consister à déplacer le plieur 3 dans un plan vertical, dit plan de pliage, désaxé par rapport au centre du plateau rotatif 2. On entend par « désaxé » le fait que le plan de pliage ne passe pas par le centre du plateau rotatif ou, dit autrement, est parallèle à un rayon du plateau rotatif 2.

De préférence, lorsque le poste de pliage P comprend un doigt de retenue 8 mobile entre une position d'attente et une position de retenue au-dessus du plateau rotatif 2, le procédé peut consister au début du pliage, durant la réalisation d'un nombre prédéterminé de plis F1, à commander le doigt de retenue 8 en position de retenue pour maintenir le fond de tarte F sous le doigt de retenue 8. Comme vu précédemment, ce maintien permet d'obtenir une résistance suffisante de pâte pour la suite du pliage.

De préférence, lorsque le module de traitement M comprend deux postes de pliage P disposés de part et d'autre de la presse 1, le procédé peut consister à commander alternativement l'alimentation en fond de tarte F des deux postes de pliage P à l'aide des deuxièmes moyens de transfert 4.

De préférence, le procédé peut consister à transférer chaque fond de tarte F depuis la presse 1 jusque sur le plateau rotatif 2 par glissement du fond de tarte F, à l'aide des deuxièmes moyens de transfert 5, sur une surface horizontale 17 continue ou quasi continue s'étendant au même niveau que le plateau rotatif 2 et au moins entre la presse 1 et le plateau rotatif 2. Un exemple de forme particulière des deuxièmes moyens de transfert 5 et de la surface horizontale 17 permettant ce transfert par glissement sont décrits précédemment.

La présente invention a également pour objet une ligne de traitement, non illustrée sur les figures annexées, comprenant :
- au moins un poste de fabrication de pâtons,
- au moins un poste de garnissage des fonds de tarte F,
- et une machine de traitement, permettant la réalisation des fonds de tarte à partir des pâtons, située en aval du poste de fabrication des pâtons et en amont du poste de garnissage.

Conformément à la présente invention, dans une telle ligne de traitement, la machine de traitement consiste en une machine de traitement, selon la présente invention, de pâtons pour la réalisation de fonds de tarte F à bord plié.

Bien entendu, l'invention n'est pas limitée au mode de réalisation décrit et représenté aux dessins annexés. Des modifications restent possibles sans sortir pour autant du domaine de protection de l'invention.

## Revendications

1. Procédé de réalisation de fonds de tarte (F) à bord plié dans une machine de traitement de pâtons pour la réalisation de fonds de tarte (F) à bord plié, la machine de traitement comprenant un dispositif de commande et au moins un module de traitement (M), le module de traitement (M) comprenant au moins une presse (1), au moins un poste de pliage (P) comportant un plateau rotatif (2) horizontal et au moins un plieur (3) mobile dans une zone de pliage fixe par rapport au plateau rotatif (2) et des premiers, deuxièmes et troisièmes moyens de transfert (4, 5, 6), le procédé consistant à réaliser les étapes suivantes commandées par le dispositif de commande à la suite du transfert, à l'aide des premiers moyens de transfert (4), de chaque pâton dans la presse (1) :
- commander la presse (1) pour former un fond de tarte (F) avec un bord circulaire par pressage du pâton dans la presse (1),
- commander le transfert du fond de tarte (F) depuis la presse (1) sur le plateau rotatif (1) à l'aide des deuxièmes moyens de transfert (5), puis commander de manière coordonnée le plieur (3) et la rotation du plateau rotatif (1) pour obtenir, par pliages successifs de la section du bord du fond de tarte (F) se trouvant dans la zone de pliage et dépassant du plateau rotatif (2), sur toute ou partie de la circonférence du bord du fond de tarte, une succession de plis (F1) se chevauchant,
- commander l'évacuation, à l'aide des troisièmes moyens de transfert (6), du fond de tarte (F) à bord plié ainsi obtenu.

2. Procédé selon la revendication 1, **caractérisé en ce que** le plateau rotatif (2) est apte et destiné à être mis en rotation pas à pas et à l'arrêt à chaque pas de sorte à pouvoir modifier, à chaque pas commandé par un signal de commande, l'orientation angulaire du plateau rotatif (2) et **en ce qu'**il consiste à commander de manière coordonnée le plieur (3a) et la rotation pas à pas du plateau rotatif (2) selon un nombre de pas prédéterminé de sorte à réaliser chaque pli (F1) dans une position angulaire prédéterminée du plateau rotatif (2) et à modifier lors du pas suivant la position angulaire du fond de tarte (F) reposant sur le plateau rotatif (1) pour réaliser le pli (F1) suivant.

3. Procédé selon la revendication 1 ou 2, **caractérisé en ce que** chaque pli (F1) est réalisé à l'aide du plieur (3) en rabattant sensiblement vers le centre du fond de tarte (F) la section du bord du fond de tarte (F) se trouvant dans la zone de pliage en dépassant du plateau rotatif (1).

4. Procédé selon l'une quelconque des revendications 1 à 3, **caractérisé en ce qu'**il consiste à commander le plieur (3) pour le déplacer, de préférence par pivotement autour d'un axe horizontal, entre une position d'attente située à côté du plateau rotatif (2) de sorte que le plieur (3) s'étende sous la section du bord du fond de tarte (F) se trouvant dans la zone de pliage en dépassant du plateau rotatif (2) jusqu'à une position finale de pliage située au-dessus du plateau rotatif (2), le déplacement entre la position d'attente et la position finale de pliage permettant d'assurer le pliage de la section correspondante du bord du fond de tarte (F) pour former un pli (F1).

5. Procédé selon l'une quelconque des revendications 1 à 4, **caractérisé en ce que** le poste de pliage (P) comprend un marqueur (7) mobile associé au plieur (3) et **en ce qu'**il consiste à réaliser la séquence suivante pour la réalisation de chaque pli :
- à commander le marqueur (7) pour le déplacer dans la zone de pliage dans une position de marquage au-dessus du plateau rotatif (2) de sorte à exercer dans la position de marquage, par son bord d'appui (7a), une pression dans le fond de tarte (F) en retrait de la section du bord du fond de tarte (F) située dans la zone de pliage pour créer une marque dans la pâte formant un point d'inflexion, puis à commander le retour du marqueur (7) vers sa position d'attente,
- puis à commander le plieur (3) pour plier ladite section du bord du fond de tarte (F) autour du point d'inflexion.

6. Procédé, selon la revendication 5, **caractérisé en ce qu'**il consiste, lors de la réalisation du dernier pli (F1), à commander une nouvelle fois le marqueur (7) pour le déplacer vers le plieur (3) en position finale de pliage de sorte que le marqueur (7) vienne en contact avec pression sur le plieur (3) pour finaliser le dernier pli (F1).

7. Procédé selon l'une quelconque des revendications 1 à 6, **caractérisé en ce que** le poste de pliage (P) comprend un doigt de retenue (8) mobile entre une position d'attente et une position de retenue au-dessus du plateau rotatif (2) et **en ce qu'**il consiste au début du pliage, durant la réalisation d'un nombre prédéterminé de plis (F1), à commander le doigt de retenue (8) en position de retenue pour maintenir le fond de tarte (F) sous le doigt de retenue (8).

8. Procédé selon l'une quelconque des revendications 1 à 7, **caractérisé en ce qu'**il consiste à transférer chaque fond de tarte (F) depuis la presse (1) jusque sur le plateau rotatif (2) par glissement du fond de tarte (F), à l'aide des deuxièmes moyens de transfert (5), sur une surface horizontale (17) de transfert continue ou quasi continue s'étendant au même niveau que le plateau rotatif (2) et au moins entre la presse (1) et le plateau rotatif (2).

9. Procédé selon l'une quelconque des revendications 1 à 8, **caractérisé en ce qu'**il consiste à presser à chaud le pâton pour former le fond de tarte (F).

10. Procédé selon l'une quelconque des revendications 1 à 9, **caractérisé en ce que** le module de traitement (M) comprend deux postes de pliage (P) disposés de part et d'autre de la presse (1) et **en ce qu'**il consiste à commander alternativement l'alimentation en fond de tarte (F) des deux postes de pliage (P) à l'aide des deuxièmes moyens de transfert (4).

11. Machine de traitement de pâtons pour la réalisation de fonds de tarte (F) à bord plié, la machine comprenant un dispositif de commande et au moins un module de traitement (M), le module de traitement (M) comprenant :
- au moins une presse (1) permettant de réaliser, par pressage, de préférence à chaud, de chaque pâton transféré dans la presse (1), des fonds de tarte (F) à bord circulaire,
- au moins un poste de pliage (P) comportant un plateau rotatif (2) horizontal de forme circulaire et au moins un plieur (3) mobile dans une zone de pliage fixe par rapport au plateau rotatif (1), le dispositif de commande étant apte et destiné à commander de manière coordonnée le plieur (3) et le plateau rotatif (1), après le transfert d'un fond de tarte (F) sur le plateau rotatif (2), pour obtenir, par pliages successifs de la section du bord du fond de tarte (F) se trouvant dans la zone de pliage en dépassant du plateau rotatif (2), sur toute ou partie de la circonférence du bord du fond de tarte, une succession de plis (F1) se chevauchant,
- des premiers moyens de transfert (4) permettant d'alimenter la presse (1) en pâton, des deuxièmes moyens de transfert (5) permettant d'alimenter le poste de pliage (P) en fond de tarte (F) en étant aptes et destinés à transférer chaque fond de tarte (F) formé par la presse (1) jusque sur le plateau rotatif (1) et avec centrage sur ce dernier, des troisièmes moyens de transfert (6) permettant d'évacuer chaque fond de tarte (F) à bord plié ainsi obtenu, le dispositif de commande étant apte et destinée à commander lesdits premiers, deuxièmes et troisièmes moyens de transfert (4, 5, 6).

12. Machine de traitement selon la revendication 11, **caractérisée en ce que** le plateau rotatif (2) est apte et destiné à être mis en rotation pas à pas de sorte à pouvoir modifier, à chaque pas commandé par un signal de commande, la position angulaire du plateau rotatif (2) et **en ce que** le dispositif de commande est apte et destiné à commander de manière coordonnée le plieur (3a) et la rotation pas à pas du plateau rotatif (2) selon un nombre de pas prédéterminé de sorte à réaliser chaque pli (F1) dans une position angulaire prédéterminée du plateau rotatif (2) et à modifier lors du pas suivant la position angulaire du fond de tarte (F) reposant sur le plateau rotatif (1) pour réaliser le pli (F1) suivant.

13. Machine de traitement selon la revendication 11 ou 12, **caractérisée en ce que** le plieur (3) mobile est apte et destiné à être déplacé, de préférence par pivotement autour d'un axe horizontal, entre une position d'attente située à côté du plateau rotatif (2) en étant sensiblement aligné avec le bord du plateau rotatif (2) jusqu'à une position finale de pliage située au-dessus du plateau rotatif (2), le déplacement entre la position d'attente et la position finale de pliage permettant d'assurer le pliage de la section correspondante du bord du fond de tarte (F) pour former un pli (F1).

14. Machine de traitement selon l'une quelconque des revendications 11 à 13, **caractérisée en ce que** le poste de pliage (P) comprend un marqueur (7) mobile associé au plieur (3), ledit marqueur (7) comportant un bord d'appui (7a) horizontal et étant mobile entre une position d'attente et une position de marquage dans la zone de pliage, dans laquelle position de marquage le marqueur (7) est apte et destiné à exercer, par son bord d'appui (7a), une pression dans le fond de tarte (F) en retrait de la section du bord du fond de tarte (F) se trouvant dans la zone de pliage de sorte à créer une marque dans la pâte formant dans cette dernière un point d'inflexion et **en ce que** le dispositif de commande est apte et destiné, pour la réalisation de chaque pli (F1) :
- à commander le marqueur (7) pour le déplacer depuis la position d'attente jusqu'à la position de marquage, puis à commander le retour du marqueur (7) vers sa position d'attente,
- puis à commander le plieur (3) pour plier la section correspondante du bord du fond de tarte (F) autour du point d'inflexion.

15. Machine de traitement selon la revendication 14, **caractérisée en ce que** le plateau rotatif (2) comprend sur sa face supérieure un rebord (2a) annulaire en retrait de son bord de sorte à créer une rainure annulaire (20a) tournée vers l'extérieur du plateau rotatif (2) et **en ce que** le bord d'appui (7a) du marqueur (7) est apte et destiné à venir en position de marquage dans la rainure annulaire (20a).

16. Machine de traitement selon l'une quelconque des revendications 14 à 15 prises chacune en combinaison avec la revendication 13, **caractérisée en ce que** le plieur (3) est apte et destiné à se trouver, en position finale de pliage, sur la trajectoire du marqueur (7) et **en ce qu'**il comporte un élément d'appui (3a), le marqueur (7) étant alors apte et destiné, lors de son déplacement vers la position de marquage et lorsque le plieur (3) est en position de pliage, à venir en contact avec pression sur l'élément d'appui (3a) du plieur (3a) de sorte à pouvoir finaliser le dernier pli (F1).

17. Machine de traitement selon l'une quelconque des revendications 1 à 16, **caractérisé en ce que** le poste de pliage (P) comprend un doigt de retenue (8) mobile entre une position d'attente et une position de retenue au-dessus du plateau rotatif (2) de sorte à permettre, au début du pliage, durant la réalisation d'un nombre prédéterminé de plis (F1), de maintenir le fond de tarte (F) sous le doigt de retenue (8).

18. Machine de traitement selon l'une quelconque des revendications 1 à 17, **caractérisé en ce que** les troisièmes moyens de transfert (6) comprennent un préhenseur à ventouse (6a) comportant une face d'aspiration (60a), de préférence de forme circulaire, munie de trous (61a) d'aspiration permettant de saisir le fond de tarte (F), de préférence en retrait du bord plié.

19. Ligne de traitement, ladite ligne comprenant :
- au moins un poste de fabrication de pâtons,
- au moins un poste de garnissage des fonds de tarte (F),
- une machine de traitement, permettant la réalisation des fonds de tarte à partir des pâtons, située en aval du poste de fabrication des pâtons et en amont du poste de garnissage,
**caractérisée en ce que** la machine de traitement consiste en une machine de traitement de pâtons pour la réalisation de fonds de tarte (F) à bord plié selon l'une quelconque des revendications 11 à 18.

## Patentansprüche

1. Verfahren zur Herstellung von Tortenböden (F) mit gefaltetem Rand in einer Maschine zur Bearbeitung von Teiglingen für die Herstellung von Tortenböden (F) mit gefaltetem Rand, wobei die Bearbeitungsmaschine eine Steuervorrichtung und mindestens ein Bearbeitungsmodul (M) umfasst, wobei das Bearbeitungsmodul (M) mindestens eine Presse (1), mindestens eine Faltstation (P), die eine horizontale Drehplatte (2) und mindestens eine Faltvorrichtung (3), die in einem bezüglich der Drehplatte (2) ortsfesten Faltbereich beweglich ist, aufweist, und erste, zweite und dritte Transfermittel (4, 5, 6) umfasst, wobei das Verfahren darin besteht, die folgenden Schritte auszuführen, die von der Steuervorrichtung im Anschluss an den Transfer jedes Teiglings mithilfe der ersten Transfermittel (4) in die Presse (1) gesteuert werden:
- Steuern der Presse (1), um einen Tortenboden (F) mit einem kreisförmigen Rand durch Pressen des Teiglings in der Presse (1) zu formen,
- Steuern des Transfers des Tortenbodens (F) von der Presse (1) auf die Drehplatte (1) mithilfe der zweiten Transfermittel (5), danach Steuern der Faltvorrichtung (3) und der Drehung der Drehplatte (1) auf koordinierte Weise, um durch aufeinander folgende Faltungen des Teilabschnitts des Randes des Tortenbodens (F), der sich im Faltbereich befindet und über die Drehplatte (2) hinausragt, auf dem gesamten Umfang des Randes des Tortenbodens oder einem Teil davon eine Folge von Falten (F1) zu erhalten, die sich überlappen,
- Steuern des Austrags des so erhaltenen Tortenbodens (F) mit gefaltetem Rand mithilfe der dritten Transfermittel (6).

2. Verfahren nach Anspruch 1, **dadurch gekennzeichnet, dass** die Drehplatte (2) geeignet und dazu bestimmt ist, in schrittweise Drehung versetzt und in jedem Schritt gestoppt zu werden, um so in jedem durch ein Steuersignal gesteuerten Schritt die Winkelausrichtung der Drehplatte (2) ändern zu können, und dadurch, dass es darin besteht, die Faltvorrichtung (3a) und die schrittweise Drehung der Drehplatte (2) auf koordinierte Weise gemäß einer vorbestimmten Zahl von Schritten zu steuern, um so jede Falte (F1) in einer vorbestimmten Winkelposition der Drehplatte (2) herzustellen und im folgenden Schritt die Winkelposition des auf der Drehplatte (1) ruhenden Tortenbodens (F) zu ändern, um die folgende Falte (F1) herzustellen.

3. Verfahren nach Anspruch 1 oder 2, **dadurch gekennzeichnet, dass** jede Falte (F1) mithilfe der Faltvorrichtung (3) hergestellt wird, indem der Teilabschnitt des Randes des Tortenbodens (F), der sich im Faltbereich befindet und dabei über die Drehplatte (1) hinausragt, im Wesentlichen zur Mitte des Tortenbodens (F) hin umgeschlagen wird.

4. Verfahren nach einem der Ansprüche 1 bis 3, **dadurch gekennzeichnet, dass** es darin besteht, die Faltvorrichtung (3) zu steuern, um sie, vorzugsweise durch Schwenkung um eine horizontale Achse, zu verlagern zwischen einer Warteposition, die sich neben der Drehplatte (2) befindet, so dass sich die Faltvorrichtung (3) unter dem Teilabschnitt des Randes des Tortenbodens (F) erstreckt, der sich im Faltbereich befindet und dabei über die Drehplatte (2) hinausragt, und einer Faltungsendposition, die sich oberhalb der Drehplatte (2) befindet, wobei die Verlagerung zwischen der Warteposition und der Faltungsendposition ermöglicht, die Faltung des entsprechenden Teilabschnitts des Randes des Tortenbodens (F) sicherzustellen, um eine Falte (F1) zu formen.

5. Verfahren nach einem der Ansprüche 1 bis 4, **dadurch gekennzeichnet, dass** die Faltstation (P) einen beweglichen Markierer (7) umfasst, welcher der Faltvorrichtung (3) zugeordnet ist, und dadurch, dass es darin besteht, für die Herstellung jeder Falte die folgende Schrittfolge auszuführen:
- Steuern des Markierers (7), um ihn im Faltbereich in eine Markierposition oberhalb der Drehplatte (2) zu verlagern, um in der Markierposition durch seinen Auflagerand (7a) einen Druck in den Tortenboden (F) auszuüben, zurückversetzt gegenüber dem Teilabschnitt des Randes des Tortenbodens (F), der sich im Faltbereich befindet, um eine Markierung im Teig zu erzeugen, die einen Knickpunkt bildet, anschließend Steuern der Rückkehr des Markierers (7) in seine Warteposition,
- anschließend Steuern der Faltvorrichtung (3), um den Teilabschnitt des Randes des Tortenbodens (F) um den Knickpunkt umzufalten.

6. Verfahren nach Anspruch 5, **dadurch gekennzeichnet, dass** es darin besteht, bei der Herstellung der letzten Falte (F1) den Markierer (7) ein weiteres Mal zu steuern, um ihn zu der Faltvorrichtung (3) in der Faltungsendposition hin zu verlagern, so dass der Markierer (7) an der Faltvorrichtung (3) in Druckkontakt kommt, um die letzte Falte (F1) fertigzustellen.

7. Verfahren nach einem der Ansprüche 1 bis 6, **dadurch gekennzeichnet, dass** die Faltstation (P) einen Haltefinger (8) umfasst, der zwischen einer Warteposition und einer Halteposition oberhalb der Drehplatte (2) beweglich ist, und dadurch, dass es darin besteht, zu Beginn der Faltung, während der Herstellung einer vorbestimmten Anzahl von Falten (F1), den Haltefinger (8) in die Halteposition zu steuern, um den Tortenboden (F) unter dem Haltefinger (8) festzuhalten.

8. Verfahren nach einem der Ansprüche 1 bis 7, **dadurch gekennzeichnet, dass** es darin besteht, jeden Tortenboden (F) von der Presse (1) zu der Drehplatte (2) durch Verschiebung des Tortenbodens (F) mithilfe der zweiten Transfermittel (5) auf einer durchgehenden oder fast durchgehenden Transferfläche (17), die sich auf derselben Höhe wie die Drehplatte (2) und mindestens zwischen der Presse (1) und der Drehplatte (2) erstreckt, zu verlagern.

9. Verfahren nach einem der Ansprüche 1 bis 8, **dadurch gekennzeichnet, dass** es darin besteht, den Teigling heiß zu pressen, um den Tortenboden (F) zu formen.

10. Verfahren nach einem der Ansprüche 1 bis 9, **dadurch gekennzeichnet, dass** das Bearbeitungsmodul (M) zwei Faltstationen (P) umfasst, die beiderseits der Presse (1) angeordnet sind, und dadurch, dass es darin besteht, die Versorgung der zwei Faltstationen (P) mit Tortenböden (F) mithilfe der zweiten Transfermittel (4) abwechselnd zu steuern.

11. Maschine zur Bearbeitung von Teiglingen für die Herstellung von Tortenböden (F) mit gefaltetem Rand, wobei die Maschine eine Steuervorrichtung und mindestens ein Bearbeitungsmodul (M) umfasst, wobei das Bearbeitungsmodul (M) umfasst:
- mindestens eine Presse (1), welche ermöglicht, durch Pressen, vorzugsweise Heißpressen, jedes Teiglings, der in die Presse (1) verlagert wird, Tortenböden (F) mit kreisförmigem Rand herzustellen,
- mindestens eine Faltstation (P), die eine kreisförmige horizontale Drehplatte (2) und mindestens eine Faltvorrichtung (3), die in einem bezüglich der Drehplatte (1) ortsfesten Faltbereich beweglich ist, aufweist, wobei die Steuervorrichtung geeignet und dazu bestimmt ist, nach dem Transfer eines Tortenbodens (F) auf die Drehplatte (2) die Faltvorrichtung (3) und die Drehplatte (1) auf koordinierte Weise zu steuern, um durch aufeinander folgende Faltungen des Teilabschnitts des Randes des Tortenbodens (F), der sich im Faltbereich befindet und über die Drehplatte (2) hinausragt, auf dem gesamten Umfang des Randes des Tortenbodens oder einem Teil davon eine Folge von Falten (F1) zu erhalten, die sich überlappen,
- erste Transfermittel (4), welche ermöglichen, die Presse (1) mit Teiglingen zu versorgen, zweite Transfermittel (5), welche ermöglichen, die Faltstation (P) mit Tortenböden (F) zu versorgen, indem sie geeignet und dazu bestimmt sind, jeden von der Presse (1) geformten Tortenboden (F) auf die Drehplatte (1) mit Zentrierung auf dieser Letzteren zu verlagern, und dritte Transfermittel (6), welche ermöglichen, jeden so erhaltenen Tortenboden (F) mit gefaltetem Rand auszutragen, wobei die Steuervorrichtung geeignet und dazu bestimmt ist, die ersten, zweiten und dritten Transfermittel (4, 5, 6) zu steuern.

12. Bearbeitungsmaschine nach Anspruch 11, **dadurch gekennzeichnet, dass** die Drehplatte (2) geeignet und dazu bestimmt ist, in schrittweise Drehung versetzt zu werden, um so in jedem durch ein Steuersignal gesteuerten Schritt die Winkelposition der Drehplatte (2) ändern zu können, und dadurch, dass die Steuervorrichtung geeignet und dazu bestimmt ist, die Faltvorrichtung (3a) und die schrittweise Drehung der Drehplatte (2) auf koordinierte Weise gemäß einer vorbestimmten Zahl von Schritten zu steuern, um so jede Falte (F1) in einer vorbestimmten Winkelposition der Drehplatte (2) herzustellen und im folgenden Schritt die Winkelposition des auf der Drehplatte (1) ruhenden Tortenbodens (F) zu ändern, um die folgende Falte (F1) herzustellen.

13. Bearbeitungsmaschine nach Anspruch 11 oder 12, **dadurch gekennzeichnet, dass** die bewegliche Faltvorrichtung (3) geeignet und dazu bestimmt ist, vorzugsweise durch Schwenkung um eine horizontale Achse verlagert zu werden zwischen einer Warteposition, die sich neben der Drehplatte (2) befindet und dabei im Wesentlichen zum Rand der Drehplatte (2) ausgerichtet ist, und einer Faltungsendposition, die sich oberhalb der Drehplatte (2) befindet, wobei die Verlagerung zwischen der Warteposition und der Faltungsendposition ermöglicht, die Faltung des entsprechenden Teilabschnitts des Randes des Tortenbodens (F) sicherzustellen, um eine Falte (F1) zu formen.

14. Bearbeitungsmaschine nach einem der Ansprüche 11 bis 13, **dadurch gekennzeichnet, dass** die Faltstation (P) einen beweglichen Markierer (7) umfasst, welcher der Faltvorrichtung (3) zugeordnet ist, wobei der Markierer (7) einen horizontalen Auflagerand (7a) aufweist und zwischen einer Warteposition und einer Markierposition im Faltbereich beweglich ist, wobei in dieser Markierposition der Markierer (7) geeignet und dazu bestimmt ist, durch seinen Auflagerand (7a) einen Druck in den Tortenboden (F) auszuüben, zurückversetzt gegenüber dem Teilabschnitt des Randes des Tortenbodens (F), der sich im Faltbereich befindet, um eine Markierung im Teig zu erzeugen, die in diesem Letzteren einen Knickpunkt bildet, und dadurch, dass die Steuervorrichtung geeignet und dazu bestimmt ist, für die Herstellung jeder Falte (F1):
- den Markierer (7) zu steuern, um ihn aus der Warteposition in die Markierposition zu verlagern, und anschließend die Rückkehr des Markierers (7) in seine Warteposition zu steuern,
- anschließend die Faltvorrichtung (3) zu steuern, um den entsprechenden Teilabschnitt des Randes des Tortenbodens (F) um den Knickpunkt umzufalten.

15. Bearbeitungsmaschine nach Anspruch 14, **dadurch gekennzeichnet, dass** die Drehplatte (2) auf ihrer Oberseite eine ringförmige Randleiste (2a) umfasst, die gegenüber ihrem Rand zurückversetzt ist, so dass eine ringförmige Nut (20a) erzeugt wird, die der Außenseite der Drehplatte (2) zugewandt ist, und dadurch, dass der Auflagerand (7a) des Markierers (7) geeignet und dazu bestimmt ist, in der ringförmigen Nut (20a) in die Markierposition zu gelangen.

16. Bearbeitungsmaschine nach einem der Ansprüche 14 bis 15, jeweils in Kombination mit Anspruch 13, **dadurch gekennzeichnet, dass** die Faltvorrichtung (3) geeignet und dazu bestimmt ist, sich in der Faltungsendposition auf der Trajektorie des Markierers (7) zu befinden, und dadurch, dass sie ein Auflageelement (3a) aufweist, wobei der Markierer (7) dann geeignet und dazu bestimmt ist, bei seiner Verlagerung in die Markierposition, und wenn sich die Faltvorrichtung (3) in der Faltposition befindet, am Auflageelement (3a) der Faltvorrichtung (3a) in Druckkontakt zu kommen, um die letzte Falte (F1) fertigstellen zu können.

17. Bearbeitungsmaschine nach einem der Ansprüche 1 bis 16, **dadurch gekennzeichnet, dass** die Faltstation (P) einen Haltefinger (8) umfasst, der zwischen einer Warteposition und einer Halteposition oberhalb der Drehplatte (2) beweglich ist, um zu Beginn der Faltung, während der Herstellung einer vorbestimmten Anzahl von Falten (F1), zu ermöglichen, den Tortenboden (F) unter dem Haltefinger (8) festzuhalten.

18. Bearbeitungsmaschine nach einem der Ansprüche 1 bis 17, **dadurch gekennzeichnet, dass** die dritten Transfermittel (6) einen Vakuumgreifer (6a) umfassen, der eine vorzugsweise kreisförmige Saugseite (60a) aufweist, die mit Sauglöchern (61a) ausgestattet ist, und ermöglicht, den Tortenboden (F) zu greifen, vorzugsweise zurückversetzt gegenüber dem gefalteten Rand.

19. Bearbeitungslinie, wobei die Linie umfasst:
- mindestens eine Station zur Herstellung von Teiglingen,
- mindestens eine Station zum Belegen der Tortenböden (F),
- eine Bearbeitungsmaschine, welche die Herstellung der Tortenböden aus Teiglingen ermöglicht, der Station zur Herstellung der Teiglinge nachgelagert und der Station zum Belegen vorgelagert angeordnet ist, **dadurch gekennzeichnet, dass** die Bearbeitungsmaschine aus einer Maschine zur Bearbeitung von Teiglingen für die Herstellung von Tortenböden (F) mit gefaltetem Rand nach einem der Ansprüche 11 bis 18 besteht.

## Claims

1. Method of producing crimped edge tart bases (F) in a pastry portion processing machine for the production of crimped edge tart bases (F), comprising a control device and at least one processing module (M), the processing module (M) comprising at least one press (1), at least one crimping station (P) including a horizontal turntable (2) and at least one crimper (3) mobile in a crimping zone fixed relative to the turntable (2) and first, second and third transfer means (4, 5, 6), the method consisting in carrying out the following steps under the control of the control device after the transfer of each pastry portion into the press (1) by means of the first transfer means (4):
- the press (1) forming a tart base (F) with a circular edge by pressing the pastry portion in the press (1),
- transferring the tart base (F) from the press (1) onto the turntable (1) by means of the second transfer means (5), then coordinated control of the crimper (3) and the rotation of the turntable (1) to obtain a succession of overlapping crimps (F1) by successively crimping the section of the edge of the tart base (F) located in the crimping zone and projecting from the turntable (2) over all of the circumference of the edge of the tart base,
- evacuating by means of the third transfer means (6) the crimp edge tart base (F) obtained in this way.

2. Method according to claim 1 **characterised in that** the turntable (2) is able and intended to be rotated stepwise and to stop in each step so as to be able, in each step under the control of a control signal, to modify the angular orientation of the turntable (2), and **in that** it consists in coordinated control of the crimper (3a) and the stepwise rotation of the turntable (2) in a predetermined number of steps so as to produce each crimp (F1) in a predetermined angular position of the turntable (2) and in the next step to modify the angular position of the tart base (F) resting on the turntable (1) to produce the next crimp (F1).

3. Method according to claim 1 or 2 **characterised in that** each crimp (F1) is produced by means of the crimper (3) by folding substantially toward the centre of the tart base (F) the section of the edge of the tart base (F) located in the crimping zone and projecting from the turntable (1).

4. Method according to any one of claims 1 to 3 **characterised in that** it consists in moving the crimper (3), preferably by pivoting about a horizontal axis, between a waiting position beside the turntable (2) so that the crimper (3) extends under the section of the edge of the tart (F) located in the crimping zone projecting from the turntable (2) to a final crimping position above the turntable (2), the movement between the waiting position and the final crimping position enabling crimping of the corresponding section of the edge of the tart base (F) to form a crimp (F1).

5. Method according to any one of claims 1 to 4 **characterised in that** the crimping station (P) comprises a mobile marker (7) associated with the crimper (3) and **in that** it consists in carrying out the following sequence for the production of each crimp:
- the marker (7) moving in the crimping zone into a marking position above the turntable (2) so as in the marking position to exert via its bearing edge (7a) pressure on the tart base (F) set back from the position of the edge of the tart (F) located in the crimping zone to create a mark in the pastry forming a point of inflection, then returning the marker (7) to its waiting position,
- the crimper (3) then crimping said section of the edge of the tart base (F) about the point of inflection.

6. Method according to claim 5 **characterised in that**, during the production of the last crimp (F1), it consists in the marker (7) again moving toward the crimper (3) in the final crimping position so that the marker (7) comes into contact with pressure on the crimper (3) to finalise the last crimp (F1).

7. Method according to any one of claims 1 to 6 **characterised in that** the crimping station (P) comprises a retaining finger (8) mobile between a waiting position and a retaining position above the turntable (2) and **in that** it consists, at the start of crimping during the production of a predetermined number of crimps (F1), in the retaining finger (8) in the retaining position retaining the tart base (F) under the retaining finger (8).

8. Method according to any one of claims 1 to 7 **characterised in that** it consists in transferring each tart base (F) from the press (1) onto the turntable (2) by sliding the tart base (F) by means of the second transfer means (5) onto a continuous or quasi continuous horizontal surface (17) extending at the same level as the turntable (2) and at least between the press (1) and the turntable (2).

9. Method according to any one of claims 1 to 8 **characterised in that** it consists in hot pressing the pastry portion to form the tart base (F).

10. Method according to any one of claims 1 to 9 **characterised in that** the processing module (M) comprises two crimping stations (P) on respective opposite sides of the press (1) and **in that** it consists in alternately feeding tart bases (F) to the two crimping stations (P) by means of the second transfer means (4).

11. Pastry portion processing machine for producing crimped edge tart bases (F), the machine comprising a control device and at least one processing module (M), the processing module (M) comprising:
- at least one press (1) enabling production of circular edge tart bases (F) by pressing, preferably hot pressing, each pastry portion transferred into the press (1),
- at least one crimping station (P) including a horizontal turntable (2) of circular shape and at least one crimper (3) mobile in a crimping zone fixed relative to the turntable (1), the control device being able and intended for coordinated control of the crimper (3) and the turntable (1) after the transfer of a tart base (F) onto the turntable (2) to obtain a succession of overlapping crimps (F1) by successively crimping the section of the edge of the tart base (F) located in the crimping zone and projecting from the turntable (2) over all or part of the circumference of the edge of the tart base,
- first transfer means (4) for feeding the press (1) with pastry portions, second transfer means (5) for feeding the crimping station (P) with tart bases (F), able and intended to transfer each tart base (F) formed by the press (1) onto the turntable (1) and centred on the latter, and third transfer means (6) for evacuating each crimped edge tart base (F) obtained in this way, the control device being able and intended to control said first, second and third transfer means (4, 5, 6).

12. Processing machine according to claim 11 **characterised in that** the turntable (2) is able and intended to be rotated stepwise so as to be able, in each step under the control of a control signal, to modify the angular position of the turntable (2), and **in that** the control device is able and intended for coordinated control of the crimper (3a) and the stepwise rotation of the turntable (2) in a predetermined number of steps so as to produce each crimp (F1) in a predetermined angular position of the turntable (2) and in the next step to modify the angular position of the tart base (F) resting on the turntable (1) to produce the next crimp (F1).

13. Processing machine according to claim 11 or 12 **characterised in that** the mobile crimper (3) is able and intended to be moved, preferably by pivoting about a horizontal axis, between a waiting position beside the turntable (2) substantially aligned with the edge of the turntable (2) to a final crimping position above the turntable (2), the movement between the waiting position and the final crimping position enabling crimping of the corresponding section of the edge of the tart base (F) to form a crimp (F1).

14. Processing machine according to any one of claims 11 to 13 **characterised in that** the crimping station (P) comprises a mobile marker (7) associated with the crimper (3), said marker (7) including a horizontal bearing edge (7a) and being mobile between a waiting position and a marking position in the crimping zone, in which marking position the marker (7) is able and intended to exert, via its bearing edge (7a), pressure on the tart base (F) set back from the section of the edge of the tart base (F) located in the crimping zone so as to create a mark in the pastry forming in the latter a point of inflection, and **in that** the control device is able and intended, for the production of each crimp (F1):
- to move the marker (7) from the waiting position to the marking position, then to return the marker (7) to its waiting position,
- to cause the crimper (3) to crimp the corresponding section of the tart base (F) about the point of inflection.

15. Processing machine according to claim 14 **characterised in that** the turntable (2) comprises on its upper face an annular rim (2a) set back from its edge so as to create an annular groove (20a) facing toward the exterior of the turntable (2), and **in that** the bearing edge (7a) of the marker (7) is able and intended to come into a marking position in the annular groove (20a).

16. Processing machine according to either one of claims 14 or 15 each in combination with claim 13 **characterised in that** the crimper (3) is able and intended to be located, in the final crimping position, on the trajectory of the marker (7), and **in that** it includes a bearing element (3a), the marker (7) then being able and intended, during its movement to the marking position and when the crimper (3) is in the crimping position, to come into contact with pressure on the bearing element (3a) of the crimper (3) so as to be able to finalise the last crimp (F1).

17. Processing machine according to any one of claims 1 to 16 **characterised in that** the crimping station (P) comprises a retaining finger (8) mobile between a waiting position and a retaining position over the turntable (2) so as to enable, at the start of crimping during the production of a predetermined number of crimps (F1), retention of the tart base (F) under the retaining finger (8).

18. Processing machine according to any one of claims 1 to 17 **characterised in that** the third transfer means (6) comprise a suction grasper (6a) including a suction face (60a), preferably of circular shape, with suction holes (61a) for grasping the tart base (F), preferably set back from the crimped edge.

19. Processing line, said line comprising:
- at least one pastry portion producing station,
- at least one station for filling tart bases (F),
- a processing machine for producing tart bases from pastry portions, situated downstream of the pastry portion production station and upstream of the filling station,
**characterised in that** the processing machine consists in a pastry portion processing machine for producing crimped edge tart bases (F) according to any one of claims 11 to 18.
